# EUROPÄISCHE PATENTANMELDUNG

(11) **EP 0 965 616 A1**
(43) Veröffentlichungstag der Anmeldung: **22.12.1999**
(21) Anmeldenummer: 99110830.9
(22) Anmeldetag: 05.06.1999
(51) Int. Cl.: C09B 67/48, C09B 67/10, C09B 63/00

(54) **Neue Kristallmodifikation vom Pigment C.I. Pigment Red 53:2 (delta-Phase)**

(30) Priorität: 19.06.1998 DE 19827273
(71) Anmelder: Clariant GmbH, 65929 Frankfurt am Main (DE)
(72) Erfinder: Schmidt, Martin U., Dr., 65931 Frankfurt am Main (DE); Metz, Hans Joachim, Dr., 64285 Darmstadt (DE)

(57) **Zusammenfassung**

Die Erfindung betrifft eine neue Kristallmodifikation (δ-Modifikation) von C.I. Pigment Red 53:2 der Formel (1) 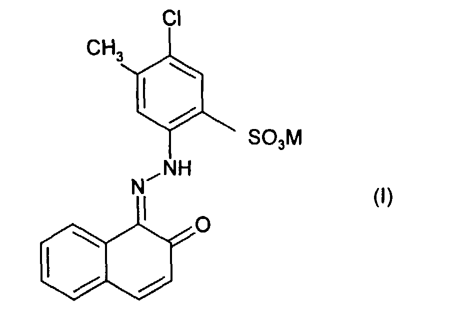 mit folgenden charakteristischen Reflexen im Röntgenpulverdiffraktogramm:

| 2Θ | d | relative Intensität (in %) |
|---|---|---|
| 3.3 | 26.6 | 32 |
| 4.7 | 18.7 | 100 |
| 7.5 | 11.9 | 14 |
| 9.4 | 9.3 | 19 |
| 10.5 | 8.4 | 13 |
| 13.8 | 6.4 | 10 |
| 14.2 | 6.2 | 9 |
| 14.9 | 5.9 | 10 |
| 16.7 | 5.3 | 11 |
| 17.6 | 5.0 | 9 |
| 18.1 | 4.9 | 16 |
| 18.9 | 4.7 | 10 |
| 20.4 | 4.3 | 7 |
| 21.1 | 4.2 | 9 |
| 22.1 | 4.0 | 9 |
| 22.7 | 3.9 | 12 |
| 23.1 | 3.8 | 9 |
| 23.6 | 3.8 | 13 |
| 24.1 | 3.7 | 9 |
| 24.9 | 3.6 | 10 |
| 25.5 | 3.5 | 23 |
| 26.3 | 3.4 | 9 |
| 27.7 | 3.2 | 9 |
| 28.1 | 3.2 | 6 |
| 28.9 | 3.1 | 6 |
| 30.4 | 2.9 | 6 |

## Beschreibung

Die Erfindung betrifft eine neue kristallographische Modifikation (δ-Modifikation) von C.I. Pigment Red 53:2. Als C.I. Pigment Red 53:2 (im folgenden: P.R.53:2) wird die Verbindung der Formel (I) bezeichnet, die aus einer Kupplung von diazotierter 2-Amino-5-chlor-4-methyl-benzolsulfonsäure mit β-Naphthol, und nachfolgender Umsetzung der gebildeten Sulfosäure mit einem Calciumsalz entsteht (M = _{½} Ca²⁺).

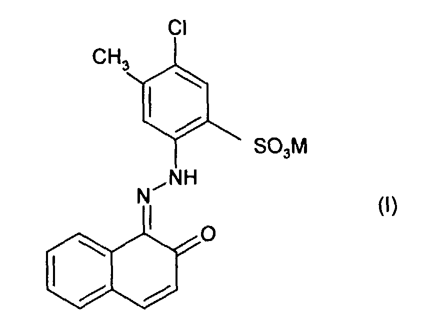

Im festen Zustand kann die Verbindung der Formel (I) auch in einer anderen tautomeren oder isomeren Form vorliegen und gegebenenfalls noch Na⁺-Ionen, Cl-Ionen und/oder Wassermoleküle enthalten.

Pigment Red 53 ist als Natriumsalz (M = Na⁺) schon seit langem bekannt. Das Bariumsalz, P.R.53:1, (M = Ba²⁺/2) wird seit langem in großen Mengen als rotes Pigment produziert. Es findet seinen Einsatz hauptsächlich in Druckfarben. Das Strontiumsalz (P.R.53:3) ist von geringerer wirtschaftlicher Bedeutung, ebenso die einzige bislang bekannte Modifikation des Calciumsalzes (Pigment Red 53:2).

Die meisten organischen Pigmente existieren in mehreren verschiedenen Kristallmodifikationen, auch "polymorphe Formen" genannt. Kristallmodifikationen haben dieselbe chemische Zusammensetzung, aber eine unterschiedliche Anordnung der Moleküle im Kristall. Die Kristallstruktur kann Einfluß auf die chemischen und physikalischen Eigenschaften haben, daher unterscheiden sich die einzelnen Kristallmodifikationen oftmals in der Rheologie, der Farbe und anderen coloristischen Eigenschaften. Die unterschiedlichen Kristallmodifikationen können durch Röntgenpulverdiffraktometrie identifiziert werden.

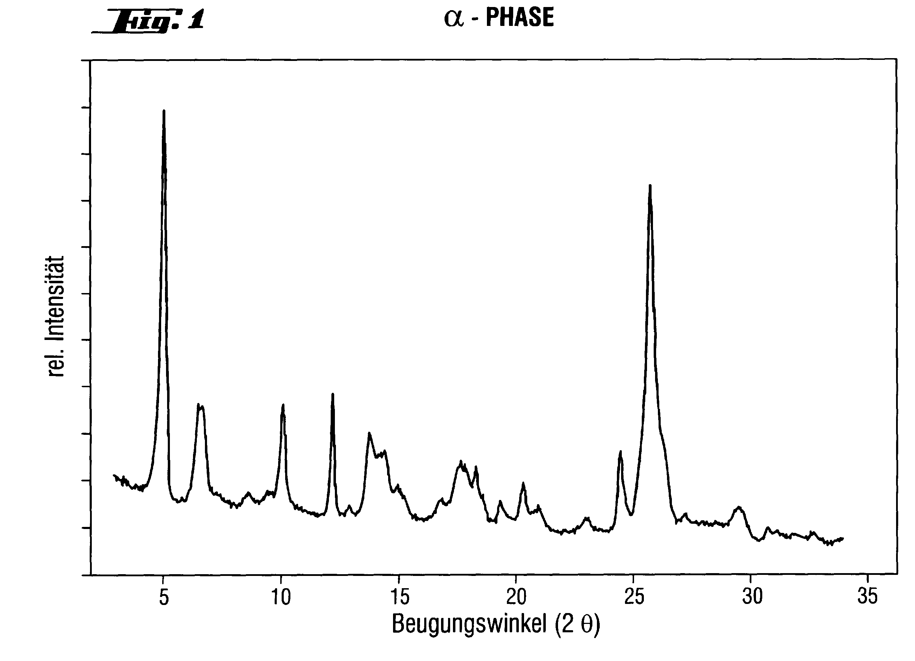

Von P.R.53:2 (M = Ca²⁺/2) ist bislang eine Kristallmodifikation bekannt, die im folgenden als α-Modifikation bezeichnet wird. Sie zeichnet sich durch folgende charakteristische Linien im Röntgenpulverdiagramm aus (Cu-K_{α}-Strahlung, doppelte Beugungswinkel, 2Θ-Werte in Grad, Netzebenenabstände d in Å⁻¹, siehe Fig. 1):
α:

| 2Θ | d | Relative Intensität in % |
|---|---|---|
| 5.1 | 17.4 | 100 |
| 6.6 | 13.4 | 73 (Doppellinie) |
| 10.2 | 8.7 | 37 |
| 12.2 | 7.2 | 39 |
| 13.8 | 6.4 | 31, breit |
| 14.4 | 6.2 | 27, breit |
| 17.8 | 5.0 | 24, breit |
| 18.4 | 4.8 | 22 |
| 20.4 | 4.4 | 20 |
| 24.6 | 3.6 | 26 |
| 25.8 | 3.4 | 86 |

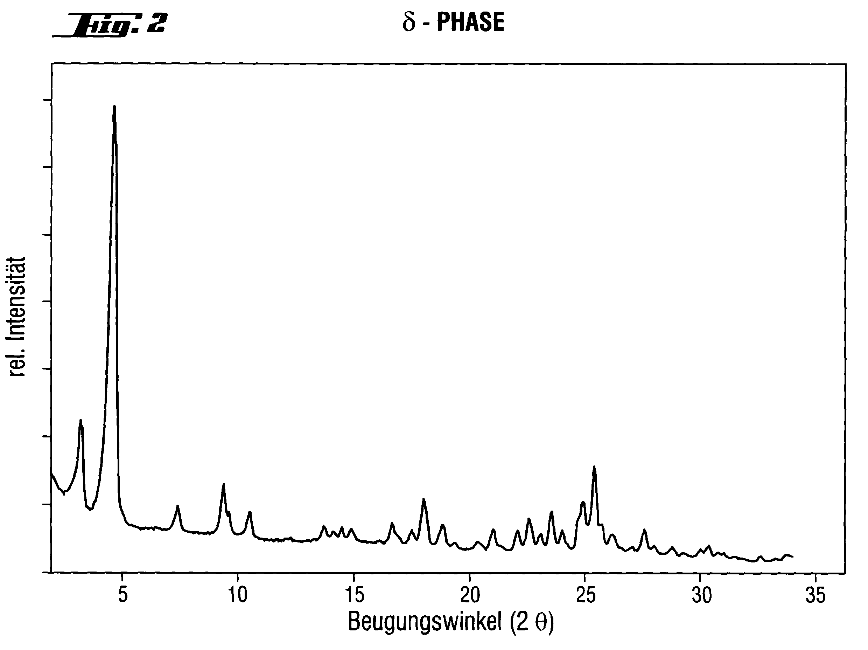

Alle Linienlagen sind mit einer Ungenauigkeit von ± 0.2° behaftet. Je nach Kristallgröße und Kristallqualität können die Linien bei 13.8° und 14.4° zu einer breiten Linie verschmelzen, ebenso die Linien bei 17.8° und 18.4°.
Es wurde nun überraschenderweise eine neue Kristallmodifikation von P.R.53:2 gefunden, die als δ-Modifikation bezeichnet wird. Sie zeichnet sich durch folgende charakteristische Linien aus (Cu-K_{α}-Strahlung, 2Θ-Werte in Grad, d-Werte in Å⁻¹, siehe Fig. 2):
δ:

| 2Θ | d | relative Intensität (in %) |
|---|---|---|
| 3.3 | 26.6 | 32 |
| 4.7 | 18.7 | 100 |
| 7.5 | 11.9 | 14 |
| 9.4 | 9.3 | 19 |
| 10.5 | 8.4 | 13 |
| 13.8 | 6.4 | 10 |
| 14.2 | 6.2 | 9 |
| 14.9 | 5.9 | 10 |
| 16.7 | 5.3 | 11 |
| 17.6 | 5.0 | 9 |
| 18.1 | 4.9 | 16 |
| 18.9 | 4.7 | 10 |
| 20.4 | 4.3 | 7 |
| 21.1 | 4.2 | 9 |
| 22.1 | 4.0 | 9 |
| 22.7 | 3.9 | 12 |
| 23.1 | 3.8 | 9 |
| 23.6 | 3.8 | 13 |
| 24.1 | 3.7 | 9 |
| 24.9 | 3.6 | 10 |
| 25.5 | 3.5 | 23 |
| 26.3 | 3.4 | 9 |
| 27.7 | 3.2 | 9 |
| 28.1 | 3.2 | 6 |
| 28.9 | 3.1 | 6 |
| 30.4 | 2.9 | 6 |

Auch hier sind alle Linienlagen mit einer Ungenauigkeit von ± 0.2° behaftet.

Die relativen Intensitäten werden üblicherweise durch Vorzugsorientierung und Textureffekte beeinflußt.

Es ist möglich, daß ein Teil (bis zu 50 %), der Ca-Ionen im Kristallgitter der erfindungsgemäßen Kristallmodifikation durch andere Kationen, z.B. Na⁺, H⁺, K⁺, NH₄⁺, Mg²⁺, Sr²⁺, Ba²⁺, Sn²⁺, Zn²⁺, Mn²⁺, Fe²⁺, Fe³⁺, Al³⁺, Si⁴⁺, Ti⁴⁺ oder TiO²⁺, ersetzt ist. Solche Mischkristalle können sich bilden, wenn bei den nachstehend beschriebenen Maßnahmen zur Herstellung der erfindungsgemäßen Modifikation auch die genannten anderen Kationen zugegen sind. Außerdem können Anionen, wie z.B. Cl⁻, und/oder Wassermoleküle im Kristallgitter eingelagert sein. Es ist jedoch bevorzugt, daß M zu 80% bis annähernd 100 % Ca/2 bedeutet.

Gegenstand der Erfindung ist daher C.I. Pigment Red 53:2 der vorstehenden Formel (I), worin M ein Kation ist, mit der Maßgabe, daß mindestens 50 % der Kationen Calciumionen sind, in der δ-Modifikation, gekennzeichnet durch vorstehend genannte charakteristische Reflexe im Röntgenpulverdiffraktogramm.

Die δ-Modifikation ist schwerlöslich, farbstark und zeichnet sich durch brillante, orange Färbungen aus.

Gegenstand der Erfindung ist auch ein Verfahren zur Herstellung der δ-Modifikation von C.I. Pigment Red 53:2, indem man β-Naphthol mit dem Diazoniumsalz der Formel (2) 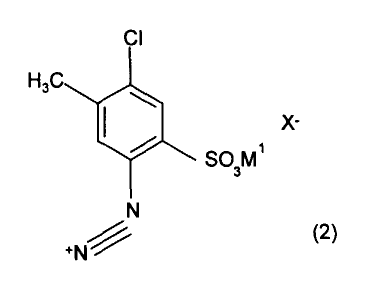
wobei M¹ Wasserstoff oder ein Kationenequivalent, wie z.B. Na, K, ½ Mg, 1/3 Al, ½ Zn oder NH₄;
und X ein Anion oder Anionenequivalent, wie z.B. Cl⁻, ½ SO₄²⁻, HSO₄⁻, NO₃⁻ oder CH₃COO⁻, bedeuten;
und einem Calciumsalz, beispielsweise CaCl₂, Ca(NO₃)₂, Ca-Acetat, Ca(HCO₃)₂, CaCO₃, CaO, Ca(OH)₂, in Gegenwart von Chlorbenzol umsetzt.

Die Umsetzung kann üblicherweise bei Temperaturen von 0°C bis 200°C, vorzugsweise von 20°C bis zum Siedepunkt des genannten Lösemittels bei Normaldruck, durchgeführt werden.

Die erfindungsgemäße Kristallmodifikation erhält man ebenfalls, wenn man C.I. Pigment Red 53:2, welches vollständig oder teilweise in der α-Modifikation vorliegt, zusammen mit Chlorbenzol oder einem Chlorbenzol/Wasser-Gemisch auf eine Temperatur von 40 bis 200°C, vorzugsweise 60°C bis zum Siedepunkt des Lösemittels oder Lösemittelgemisches bei Normaldruck, erhitzt, wobei das Pigment teilweise oder vollständig in Lösung geht, und anschließend wieder ausfällt, beispielsweise durch Temperaturerniedrigung auf -20 bis +90°C und/oder durch Zugabe von Wasser oder/und einem zweiten Lösemittel mit geringerem Lösungsvermögen, und/oder durch Änderung des pH-Wertes, und/oder durch Zugabe eines Salzes, wie z.B. NaCl.

Das zum Lösen oder teilweisen Lösen in der Hitze verwendete Chlorbenzol/Wassergemisch kann bis zu 95 Gew.-% Wasser enthalten.
Das Erhitzen kann bei Normaldruck, bei Unterdruck oder unter Druck erfolgen. Als zweites Lösungsmittel eignen sich beispielsweise Benzol, Toluol oder Alkane. Die Änderung des pH-Wertes kann durch Zugabe von Säuren oder Basen hervorgerufen werden.
Das als Ausgangsprodukt eingesetzte P.R. 53:2 kann als Trockenpigment, als wasserfeuchter Preßkuchen, als Lösung oder als wäßrige Suspension eingesetzt werden. Die Dauer der beschriebenen Lösemittelbehandlung kann 10 Sekunden bis 24 Stunden, vorzugsweise 10 Minuten bis 2 Stunden, betragen. Um die erfindungsgemäße Kristallmodifikation zu erhalten, ist es zweckmäßig, anschließend die Temperatur auf einen Wert im Bereich zwischen 20 und 80°C abzusenken, vorzugsweise im Verlauf von 5 Minuten bis 2 Stunden.

Das erfindungsgemäße P.R. 53:2 der δ-Modifikation kann in der Wärme oder nach Abkühlen, z.B. auf Raumtemperatur, in der üblichen Weise, z.B. durch Abfiltrieren oder durch Verdampfen des Lösemittels, gegebenenfalls unter Anlegen von Vakuum, isoliert werden. Es kann zweckmäßig sein, den Preßkuchen oder Rückstand mit Wasser, einer organischen Flüssigkeit, z.B. einem niederen Alkohol, wie Methanol, Ethanol, Propanol oder Isopropanol, oder mit Aceton zu waschen.

Je nach gewünschtem Anwendungsbereich kann es sinnvoll sein, das erhaltene Pigment einer mechanischen Feinverteilung zu unterwerfen. Die Feinverteilung kann durch Naß- oder Trockenmahlung erfolgen. An die Mahlung kann sich eine Behandlung mit einem Lösemittel, mit Wasser oder einem Lösemittel-Wasser-Gemisch anschließen, um das Pigment in eine gebrauchsfähige Form zu überführen.

Die erfindungsgemäße Kristallmodifikation wird ebenfalls erhalten, wenn man C.I. Pigment Red 53:2, welches vollständig oder teilweise in der α-Modifikation vorliegt, in Gegenwart von Chlorbenzol oder einem Chlorbenzol/Wasser-Gemisch knetet oder mahlt. Das Kneten oder Mahlen kann bei einer Temperatur von 40 bis 200°C, vorzugsweise von 60 bis zum Siedepunkt des gewählten Lösemittels bei Normaldruck, durchgeführt werden.

In Abhängigkeit von der Zusammensetzung des chlorbenzolhaltigen Gemisches, der Konzentration, der angewandten Temperatur, dem Druck, der Abkühlungsgeschwindigkeit der Lösung und der Gegenwart von Impfkristallen kann die reine δ-Phase oder eine Mischung von α- und δ-Phase entstehen.

Die reine oder überwiegend reine δ-Modifikation entsteht bevorzugt, wenn man von einer Lösung ausgeht, in der bereits Impfkristalle oder Kristallkeime der δ-Modifikation vorhanden sind, und wenn man diese Lösung so langsam abkühlt, oder ein zweites, schlechter lösendes Lösemittel, eine Säure, Base oder ein Salz so langsam zugibt, daß die Übersättigung in einem Bereich gehalten wird, in dem die Kristallwachstumsgeschwindigkeit relativ hoch, die Kristallkeimbildungsgeschwindigkeit jedoch relativ gering ist, so daß die vorhandenen Kristallkeime unter Beibehaltung der Modifikation wachsen. Der Einsatz eines mechanischen Rührers kann von Vorteil sein, da er vorhandene Kristalle der δ-Modifikation in viele kleinere Bruchstücke zerschlägt, die dann wieder als Kristallkeime für die δ-Modifikation dienen (sogenannte Sekundärnukleation). Wenn die Übersättigung höher ist, z.B. weil die Lösung schneller abgekühlt wird, oder ein zweites Lösemittel, eine Säure, Base oder ein Salz schneller zugegeben wird, ist die Kristallkeimbildungsgeschwindigkeit viel höher, so daß spontan viele Kristallkeime der α- und δ-Modifikation entstehen können; dabei erhält man meist Modifikationsmischungen, die nur zum Teil aus der δ-Modifikation bestehen.

Die Herstellung einer Mischung der α- und δ-Modifikation kann von Interesse sein, wenn bestimmte coloristische und rheologische Eigenschaften gewünscht werden, beispielsweise ein bestimmter Orange-Farbton, der außerhalb oder zwischen der orangeroten α-Modifikation und der orangen δ-Modifikation liegt. Andererseits ist es auch möglich, eine Mischung aus δ-Modifikation und α-Modifikation aufzukonzentrieren, um einen höheren δ-Anteil oder auch die reine δ-Modifikation zu erhalten, beispielsweise durch Windsichten, Rekristallisation, selektives Herauslösen oder Extrahieren der α-Modifikation oder durch wiederholtes Anwenden von erfindungsgemäßen Verfahrensmaßnahmen, in denen das Entstehen der δ-Modifikation begünstigt ist.

Gegenstand der vorliegenden Erfindung ist daher auch eine C.I. Pigment Red 53:2-Mischung, die mindestens 10 %, vorzugsweise mindestens 25 %, insbesondere mindestens 50 %, besonders bevorzugt mindestens 75 %, der δ-Modifikation enthält.

Zur Erleichterung des Modifikationswechsels, zur Stabilisierung der δ-Modifikation, zur Verbesserung der coloristischen Eigenschaften und/oder zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Behandlungen (Erwärmen mit einem Lösemittel oder in Wasser, Umkristallisieren, Mahlen, Kneten) oder nach den Nachbehandlungen zugegeben werden. Der am besten geeignete Zeitpunkt muß zuvor durch orientierende Versuche ermittelt werden.

Das erfindungsgemäße C.I. Pigment Red 53:2 in der δ-Modifikation, oder Mischungen, die die δ-Modifikation enthalten oder die beschriebenen Mischkristalle der δ-Modifikation mit anderen Kationen, eignen sich zum Pigmentieren von Lacken und Kunststoffen, zur Herstellung von Druckfarben und wäßrigen Pigmentpräparationen, sowie zur Saatguteinfärbung.

Die erfindungsgemäße δ-Modifikation, besagte Mischungen sowie besagte Mischkristalle sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner,Flüssigtoner, Polymerisationstoner sowie Spezialtoner.

Typische Tonerbindemittel sind Polymerisations-, Polyadditions- und Polykondensationsharze, wie Styrol-,Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäße δ-Modifikation, eine der besagten Mischungen oder Mischkristalle geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge,verkappte Isocyanate, Bisacylurethane, Phenol- und Melaminharze, Triglycidylisocyanurate, Oxazoline und Dicarbonsäuren.

Außerdem sind die erfindungsgemäße δ-Modifikation oder eine der besagten Mischungen und Mischkristalle als Farbmittel in Ink-Jet Tinten auf wäßriger und nichtwäßriger Basis sowie in solchen Tinten, die nach dem hot-melt Verfahren arbeiten, geeignet.
Weiterhin sind die erfindungsgemäße δ-Modifikation oder eine der besagten Mischungen und Mischkristalle als Farbmittel für Farbfilter sowohl für die additive wie subtraktive Farberzeugung geeignet.

In den folgenden Beispielen sind Teile und Prozentangaben auf das Gewicht bezogen. Die Bestimmung der Kristallmodifikation der erhaltenen Produkte erfolgt durch Röntgenpulverdiffraktometrie (Cu-K_{α}-Strahlung).

### Beispiele:

1) Zugabe von Chlorbenzol bei der Verlackung
   a) Diazotierung und Kupplung:
      226 Teile 2-Amino-4-methyl-5-chlor-benzolsulfonsäure werden bei Raumtemperatur mit 2500 Teilen Wasser und 150 Teilen 31%iger Salzsäure verrührt. Bei 20-25°C wird mit 173 Teilen 40%iger NaNO₂-Lösung innerhalb von 30 Minuten diazotiert und 1 Stunde bei Raumtemperatur nachgerührt.
      150 Teile β-Naphthol werden in 1100 Teilen 4%iger NaOH gelöst und bei Raumtemperatur innerhalb von 60 Minuten zur Diazo-Suspension zugegeben.
   b) Verlackung in Gegenwart von Chlorbenzol:
      Der pH-Wert der Suspension wird mit NaOH auf 8,0 gestellt und 480 Teile Chlorbenzol und 76 Teile CaCl₂ zugegeben. Das Chlorbenzol wird durch Einleiten von Dampf abdestilliert (bei Normaldruck). Die Mischung wird heiß filtriert. Der Preßkuchen wird mit kaltem Wasser gewaschen und bei 60°C getrocknet. Man erhält 400 Teile P.R. 53:2 in der δ-Modifikation.
2) Zugabe von Chlorbenzol nach der Verlackung
   Die Diazotierung und Kupplung werden wie in Beispiel 1 durchgeführt. Der pH-Wert der Suspension aus Beispiel 1a) wird mit NaOH auf 8,0 gestellt und 61 Teile CaCl₂ und 500 Teile Wasser zugegeben. Die Mischung wird 15 Minuten lang bei 95°C gerührt. Die Suspension wird bei 80°C mit 2400 Teilen Chlorbenzol versetzt und die Mischung wird 2 Stunden lang am Rückfluß erhitzt (88-90°C). Das Chlorbenzol wird mit Dampf abdestilliert; die Mischung wird filtriert, der Rückstand mit Wasser gewaschen und bei 60°C getrocknet. Man erhält 408 Teile P.R. 53:2 in der δ-Modifikation.
3) Behandlung des Preßkuchens mit Chlorbenzol
   Die Diazotierung und Kupplung werden wie in Beispiel 1 durchgeführt. Der pH-Wert der Suspension aus Beispiel 1a) wird mit NaOH auf 8,0 gestellt und 61 Teile CaCl₂ und 500 Teile Wasser zugegeben. Die Suspension wird 15 Minuten lang bei 95°C gerührt, heiß filtriert und der Preßkuchen salzfrei gewaschen. Man erhält 1534 Teile Preßkuchen. 128 Teile dieses Preßkuchens werden mit 332 Teilen Wasser und 200 Teilen Chlorbenzol verrührt und 2 Stunden lang am Rückfluß erhitzt (88-90°C). Das Chlorbenzol wird mit Dampf abdestilliert, die Mischung filtriert, der Rückstand mit Wasser gewaschen und bei 60°C getrocknet. Man erhält 30 Teile P.R. 53:2 in der δ-Modifikation (siehe Fig. 2).

## Patentansprüche

1. C.I. Pigment Red 53:2 der Formel (I) 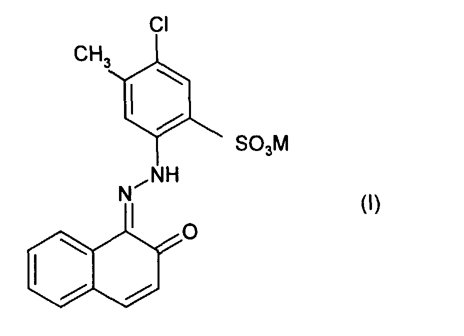
worin M ein Kation ist, mit der Maßgabe, daß mindestens 50 % der Kationen Calciumionen sind,
in der δ-Modifikation, gekennzeichnet durch folgende charakteristische Reflexe im Röntgenpulverdiffraktogramm, gemessen mit Cu-K_{α}-Strahlung:
δ:
| 2Θ | d | relative Intensität (in %) |
|---|---|---|
| 3.3 | 26.6 | 32 |
| 4.7 | 18.7 | 100 |
| 7.5 | 11.9 | 14 |
| 9.4 | 9.3 | 19 |
| 10.5 | 8.4 | 13 |
| 13.8 | 6.4 | 10 |
| 14.2 | 6.2 | 9 |
| 14.9 | 5.9 | 10 |
| 16.7 | 5.3 | 11 |
| 17.6 | 5.0 | 9 |
| 18.1 | 4.9 | 16 |
| 18.9 | 4.7 | 10 |
| 20.4 | 4.3 | 7 |
| 21.1 | 4.2 | 9 |
| 22.1 | 4.0 | 9 |
| 22.7 | 3.9 | 12 |
| 23.1 | 3.8 | 9 |
| 23.6 | 3.8 | 13 |
| 24.1 | 3.7 | 9 |
| 24.9 | 3.6 | 10 |
| 25.5 | 3.5 | 23 |
| 26.3 | 3.4 | 9 |
| 27.7 | 3.2 | 9 |
| 28.1 | 3.2 | 6 |
| 28.9 | 3.1 | 6 |
| 30.4 | 2.9 | 6 |

2. C.I. Pigment Red 53:2 nach Anspruch 1, dadurch gekennzeichnet, daß M zu 80 % bis annähernd 100 % Calcium bedeutet.

3. C.I. Pigment Red 53:2 nach Anspruch 1 oder 2, dadurch gekennzeichnet, daß M, neben Calcium, eines oder mehrere der Kationen Na⁺, H⁺, K⁺, NH₄⁺,Mg²⁺, Sr²⁺, Ba²⁺, Sr²⁺, Zn²⁺, Mn²⁺, Fe²⁺, Fe³⁺, Al³⁺, Si⁴⁺, Ti⁴⁺ oder TiO²⁺ bedeutet.

4. Verfahren zur Herstellung von C.I. Pigment Red 53:2 nach einem oder mehreren der Ansprüche 1 bis 3, dadurch gekennzeichnet, daß man β-Naphthol mit dem Diazoniumsalz der Formel (2) 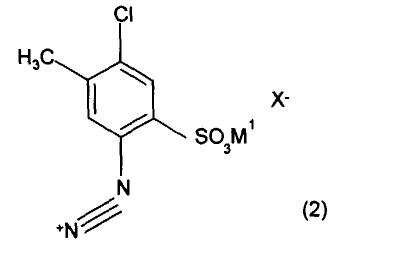
wobei M¹ Wasserstoff oder ein Kationenequivalent; und
X ein Anion, vorzugsweise Chlorid, Sulfat, Hydrogensulfat, Nitrat oderAcetat bedeutet;
und mit einem Calciumsalz, vorzugsweise CaCl₂, Ca(NO₃)₂, CaCO₃, Ca(HCO₃)₂, CaCO₃, Ca-Acetat, CaO oder Ca(OH)₂, in Gegenwart von Chlorbenzol umsetzt.

5. Verfahren nach Anspruch 4, dadurch gekennzeichnet, daß die Umsetzung bei einer Temperatur von 0 bis 200°C, vorzugsweise 20°C bis zum Siedepunkt des Chlorbenzols bei Normaldruck, durchgeführt wird.

6. Verfahren zur Herstellung von C.I. Pigment Red 53:2 nach einem oder mehreren der Ansprüche 1 bis 3, dadurch gekennzeichnet, daß man C.I. Pigment Red 53:2, welches vollständig oder teilweise in der α-Modifikation vorliegt, zusammen mit Chlorbenzol oder einem Chlorbenzol/Wasser-Gemisch auf eine Temperatur von 40 bis 200°C, vorzugsweise 60°C bis zum Siedepunkt des Lösemittels oder Lösemittelgemisches bei Normaldruck, erhitzt, anschließend auf eine Temperatur von -20 bis +90°C abkühlt, gegebenenfalls Wasser und/oder ein zweites Lösemittel mit geringerem Lösevermögen zusetzt und gegebenenfalls eine Säure, eine Lauge oder ein Salz zugibt.

7. Verfahren nach Anspruch 6, dadurch gekennzeichnet, daß das C.I. Pigment Red 53:2, welches vollständig oder teilweise in der α-Modifikation vorliegt, als Trockenpigment, als wasserfeuchter Preßkuchen oder als wäßrige Suspension eingesetzt wird.

8. Verfahren zur Herstellung von C.I. Pigment Red 53:2 nach einem oder mehreren der Ansprüche 1 bis 3, dadurch gekennzeichnet, daß man C.I. Pigment Red 53:2, welches vollständig oder teilweise in der α-Modifikation vorliegt, in Gegenwart von Chlorbenzol oder eines Chlorbenzol/Wasser-Gemisches bei einer Temperatur von 40 bis 200°C knetet oder mahlt.

9. C.I. Pigment Red 53:2-Mischung, enthaltend mindestens 10 %, vorzugsweise mindestens 25 %, insbesondere mindestens 50 %, besonders bevorzugt mindestens 75 %, der δ-Modifikation nach einem oder mehreren der Ansprüche 1 bis 3.

10. Verwendung von C.I. Pigment Red 53:2 nach einem oder mehreren der Ansprüche 1 bis 3 und 9 zum Pigmentieren von Lacken, Kunststoffen, Druckfarben, elektrophotographischen Tonern und Entwicklern, Pulverlacken, Ink-Jet-Tinten, zur Herstellung wäßriger Pigmentpräparationen, sowie zur Saatguteinfärbung.
